# EUROPÄISCHE PATENTANMELDUNG

(11) **EP 1 419 874 A1**
(43) Veröffentlichungstag der Anmeldung: **19.05.2004**
(21) Anmeldenummer: 03025507.9
(22) Anmeldetag: 06.11.2003
(51) Int. Cl.: B29C 70/08, B29C 35/08, B32B 31/00, B32B 31/28

(54) **Faserverstärkte Laminate und Verfahren zu ihrer Herstellung**

(30) Priorität: 15.11.2002 AT 17252002
(71) Anmelder: Surface Specialties Austria GmbH, 8402 Werndorf (AT)
(72) Erfinder: Awad, Rami-Raimund, Dr., 8042 Graz (AT); Lunzer, Florian, Dr., 8010 Graz (AT)
(74) Vertreter: Deckers, Hellmuth, Dr.

(57) **Zusammenfassung**

Faserverstärkte Laminate mit mindestens zwei Schichten, wobei mindestens eine Schicht ein Polymer enthält, das durch Bestrahlen mit energiereichem Licht härtbar ist, Verfahren zu ihrer Herstellung.

## Beschreibung

Die Erfindung betrifft faserverstärkte Laminate mit mindestens zwei Schichten.

Es ist bekannt, Laminate herzustellen, die Verstärkungsfasern und radikalisch oder thermisch härtbare Polymere enthalten. Üblicherweise werden hierfür ungesättigte Polyester eingesetzt. Diese enthalten häufig größere Mengen an copolymerisierbaren Monomeren, üblicherweise Styrol, die in der Mischung die Viskosität der härtbaren Mischung herabsetzen und für gute Verformbarkeit, beispielsweise durch Gießen, Wickeln oder Legen, sorgen. Bei der Verarbeitung kann dies Styrol aus den härtbaren Massen wegen der großen Oberfläche leicht entweichen; dies verursacht Umweltund Arbeitsschutzprobleme.

Es ist daher die Aufgabe der Erfindung, faserverstärkte Laminate und Bindemittel hierfür zur Verfügung zu stellen, die ohne derartige Zumischung von Styrol auskommen und Formkörper mit glatten, ansprechenden Oberflächen und guter Verformbarkeit in der Wärme vor der endgültigen Aushärtung ergeben.

Die Aufgabe wird gelöst durch die Verwendung von Bindemitteln zumindest für eine Außenschicht, die durch Bestrahlung mit energiereichem Licht härtbar sind.

Die Erfindung betrifft daher faserverstärkte Laminate mit mindestens zwei Schichten, dadurch gekennzeichnet, daß eine außenliegende Schicht **A'** ein Allyl-, Acryl- und/oder Methacryl-Gruppen aufweisendes Polymer **A** enthält, das durch energiereiche Strahlung härtbar ist, und eine angrenzende Schicht Verstärkungsfasern enthält und eine härtbare Masse **B'** enthaltend ein Polymer **B** ausgewählt aus radikalisch (**B1**) und durch Bestrahlung mit energiereichem Licht (**B2**) polymerisierbaren Systemen.

Die Erfindung betrifft weiter ein Verfahren zum Herstellen von gehärteten Laminaten, umfassend die Schritte: (1) Herstellen einer gehärteten Polymerschicht **A'** aus einem Polymeren **A** durch Bestrahlung mit energiereichem Licht, und (2) Aufbringen einer weiteren Schicht auf die in der Stufe (1) hergestellten Schicht **A',** wobei die weitere Schicht Verstärkungsfasem und eine härtbare Masse **B'** enthält, die durch radikalische Polymerisation aus einem radikalisch polymerisierbaren System **B1** und/oder durch Bestrahlung eines Systems **B2** mit energiereichem Licht hervorgeht.

Die Erfindung betrifft ebenfalls ein Verfahren zum Herstellen von geformten Laminaten, in dem die noch nicht vollständig ausgehärteten Laminate unter Wärme- und Druckeinwirkung in die gewünschte Form gebracht und anschließend ausgehärtet werden.

Insbesondere wird zunächst ein Formkörper oder eine Fläche aus einem glatten Substrat mit einer Schicht Z überzogen, die antiadhäsiv wirkt, diese Schicht wird anschließend im Schritt (1) mit einer Masse überzogen, die einen durch Bestrahlung mit energiereichem Licht polymerisierbaren Stoff **A** enthält, wobei durch Bestrahlung der Stoff **A** polymerisiert und damit gehärtet wird, im Schritt (2) wird die freie Oberfläche dieser Schicht mit einer härtbaren Masse **B'** überzogen enthaltend ein Polymer **B** ausgewählt aus radikalisch (**B1**) und durch Bestrahlung mit energiereichem Licht (**B2**) polymerisierbaren Systemen und Verstärkungsfasern, und die härtbare Masse **B'** wird dann zumindest teilweise gehärtet, und dann von der Fläche oder dem Formkörper zur endgültigen Härtung abgelöst.

Die Polymere **A** und **B2** sind unabhängig voneinander ausgewählt aus Epoxy-Acrylaten, Urethan-Acrylaten, Melamin-Acrylaten, Polyäther-Acrylaten, Polyester-Acrylaten, den entsprechenden Methacrylaten sowie Estern anderer olefinisch ungesättigter Säuren und Allylgruppen-haltigen Polyestern oder Polyäthern sowie deren Mischungen.

Epoxy-Acrylate sind Umsetzungsprodukte von Epoxidharzen **C** mit Carboxylgruppen-haltigen olefinisch ungesättigten Verbindungen **G**. Als Epoxidharze **C** können sowohl die Glycidyläther von Dihydroxyaromaten wie Resorcin, Dihydroxybenzophenon, Dihydroxydiphenylsulfon und bevorzugt Bisphenol A und Bisphenol F eingesetzt werden; es ist auch möglich, Glycidyläther von aliphatischen Diolen wie Butandiol und Hexandiol einzusetzen, sowie höhermolekulare Epoxidharze, die bevorzugt aus Bisphenol A und/oder Bisphenol F durch den Taffy-Prozeß (Umsetzen dieser Bisphenole mit Epichlorhydrin) als auch durch die sogenannte Advancement-Reaktion (Umsetzen von Bisphenol-Diglycidyläthern mit den freien Bisphenolen) zugänglich sind. Ebenso können Epoxidharze auf Basis von Novolaken und epoxidierten Ölen eingesetzt werden.

Carboxylgruppen-haltige olefinisch ungesättigte Verbindungen **G,** die hier eingesetzt werden können, sind insbesondere Acryl- und Methacrylsäure, aber auch Crotonsäure, Vinylessigsäure und die Monoester von olefinisch ungesättigten Dicarbonsäuren wie Monomethylmaleinat, Monomethylfumarat und die Monoalkylester von Citracon-, Itacon- und Mesaconsäure. Bevorzugt sind die erstgenannten Acrylsäure und Methacrylsäure.

Urethan-Acrylate sind Umsetzungsprodukte **D(E)F** von mehrfunktionellen Isocyanaten **D** und Hydroxylgruppen-haltigen olefinisch ungesättigten Verbindungen **F** sowie gegebenenfalls mehrfunktionellen aliphatischen Alkoholen **E.**

Die mehrfunktionellen Isocyanate **D** sind mindestens difunktionell und können ausgewählt werden aus aromatischen und aliphatischen linearen, cyclischen oder verzweigten Isocyanaten, insbesondere Diisocyanaten. Bevorzugt werden Diisocyanate, wobei bis zu 5 % von deren Masse durch trifunktionelle oder höherfunktionelle Isocyanate ersetzt werden kann.

Die Diisocyanate besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat, IPDI), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und α, α, α',α'-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-A 29 28 552 verwiesen.

Die gegebenenfalls eingesetzten mehrfunktionellen aliphatische Alkohole E haben mindestens zwei Hydroxylgruppen pro Molekül und 2 bis 150 Kohlenstoffatome, bevorzugt 3 bis 40, und insbesondere 4 bis 20 Kohlenstoffatome. Sie können linear, verzweigt oder cyclisch sein, und können auch Fremdatome, wie Ätherbindungen, Esterbindungen oder sekundäre oder tertiäre Aminbindungen im Molekül enthalten. Derartige Verbindungen sind Ätheralkohole oder Polyätheralkohole wie Polyäthylenglykol, Polypropylenglykol, deren Mischungen und Copolymere und Polyoxybutylendiol ("Poly-THF"), sowie Polyesteralkohole und Aminoalkohole. Bevorzugt werden Glykol, 1,2- und 1,3-Propandiol, 1,2- und 1,4-Butandiol, Neopentylglykol, 1,6-Hexandiol, Trimethyloläthan, Glycerin, Trimethylolpropan, Erythrit, Pentaerythrit, Sorbit, Mannit, Ditrimethyloläthan, Diglycerin, Ditrimethylolpropan, Diäthylenglykol, Triäthylenglykol, Di- und TriPropylenglykol, Diäthanolamin, N-Methyldiäthanolamin, Triäthanolamin, äthoxyliertes Trimethylolpropan und äthoxyliertes Glycerin.

Besonders bevorzugt sind 1,4-Butandiol und 1,6-Hexandiol.

Die Hydroxylgruppen-haltigen olefinisch ungesättigten Verbindungen F sind aliphatische ein- oder mehrfach ungesättigte Verbindungen mit 3 bis 20 Kohlenstoffatomen und mindestens einer Hydroxylgruppe. Besonders bevorzugt sind Allylakohol, und die Monoester von zweiwertigen Alkoholen **F1** mit den oben genannten olefinisch ungesättigten Säuren **G** wie Hydroxyäthylacrylat, Hydroxyäthylmethacrylat, 2- und 3-Hydroxypropyl-(meth)-acrylat, 1-Hydroxy-2-propyl-(meth)-acrylat, 4-Hydroxybutyl-(meth)-acrylat und 6-Hydroxyhexyl-(meth)-acrylat, Estern von drei- oder mehrwertigen Alkoholen mit einer Säure, die olefinisch ungesättigte Gruppen enthält, wobei mindestens eine Hydroxylgruppe unverestert bleibt, beispielsweise Trimethylolpropandi(meth)-acrylat, Pentaerythrittri(meth)acrylat, sowie die Acrylate und Methacrylate, die durch Umsetzung von (Meth)Acrylsäure mit 1,2-Epoxyverbindungen entstehen, insbesondere mit Estern oder Äthern des Glycidylalkohols mit einwertigem aliphatischen Alkoholen oder Säuren, die in bevorzugter Weise tertiäre oder quaternäre Kohlenstoffatome enthalten. Solche Verbindungen sind beispielsweise die Ester von Glycidylalkohol mit in α-Stellung verzweigten aliphatischen Monocarbonsäuren mit 5 bis 12 Kohlenstoffatomen.

Melamin-Acrylate sind Umsetzungsprodukte von Hydroxylgruppen-haltigen olefinisch ungesättigten Verbindungen **F** mit durch Umsetzung von Melamin und Aldehyden, insbesondere Formaldehyd, gewonnenen Alkylolmelaminen. Insbesondere werden die Melamin-Acrylate durch Umätherungvon Hexamethoxymethylmelamin mit den Verbindungen **F** hergestellt. Es ist auch möglich, die Verbindungen **F** direkt mit methyloliertem Melamin, beispielsweise Hexamethylolmelamin zu veräthern; dieser Prozeß wird jedoch nicht in technischen Maßstab durchgeführt.

Polyäther-Acrylate sind Ester von Polyalkylenglykolen mit Polymerisationsgraden von bevorzugt 4 bis 100, insbesondere Polypropylenglykol, Poly(oxybutylen-1,4)-glykol und gemischte Copolymere mit Oxyäthylen- und Oxypropylen-Bausteinen, mit den unter **G** genannten olefinisch ungesättigten Säuren; sie werden üblicherweise durch Umesterung mit Äthyl(meth)acrylat oder ähnlichen Estern hergestellt.

Polyester-Acrylate sind Veresterungsprodukte von olefinisch ungesättigten Säuren **G** mit Hydroxylgruppen-haltigen Polyolen oder Polyestern oder Veresterungsprodukte von Hydroxylgruppen-haltigen olefinisch ungesättigten Verbindungen **F** mit Säuregruppen eines Polyesters. Die Polyester sind üblicherweise von linearen oder verzweigten aliphatischen Polyolen mit zwei oder mehr Hydroxylgruppen und zwei bis 20 Kohlenstoffatomen wie Glykol, Neopentylglykol, Butandiol, 1,6-Hexandiol, Di- und Tri-äthylenglykol, Trimethylolpropan, Pentaerythrit und Sorbit, aliphatischen linearen oder cyclischen Dicarbonsäuren wie Adipinsäure und Cyclohexandicarbonsäure abgeleitet, die Hydroxylgruppen-haltigen Polyole von Polyäthern auf Basis von Äthylen- und Propylenoxid oder deren Mischungen sowie von Poly-Tetrahydrofuran, sowie von äthoxylierten und/oder propoxylierten mehrwertigen Alkoholen, wie den oben genannten.

Soweit oben "Acrylate" genannt sind, umfassen diese im Rahmen der Offenbarung selbstverständlich auch die entsprechenden Methacrylate und die Ester der anderen unter **G** genannten Säuren.

Allylgruppen-haltige Verbindungen sind Äther oder Ester oder gemischte Äther-Ester von Allylalkohol mit mehrwertigen Alkoholen, deren Äthoxylierungs- und/oder Propoxylierungsprodukten oder Allylester von den oben genannten aliphatischen Carboxylgruppen-haltigen Polyestern.

Die ungesättigten Polyester **B1** sind styrolfreie Polyester auf Basis von Allyläthern von mehrwertigen Alkoholen, wobei die Anzahl der Allylgruppen stets um eins geringer ist als die Anzahl der Hydroxylgruppen des unverätherten Alkohols, aliphatischen linearen, verzweigten oder cyclischen Diolen mit 2 bis 20 Kohlenstoffatomen, olefinisch ungesättigten Dicarbonsäuren mit 4 bis 20 Kohlenstoffatomen wie insbesondere Fumarsäure, und geringen Mengen von einwertigen Alkoholen, insbesondere Benzylalkohol, wobei die Menge des letzteren so zu bemessen ist, daß die Vernetzung durch die mehrfach ungesättigten Verbindungen in Grenzen zu halten ist.

Geeignete Verstärkungsfasern sind insbesondere Glasfasern, aber auch Kohlenstoffasern, Aramidfasern, insbesondere solche aus den sogenannten Hochmodulpolymeren wie Polyparaphenylenterephthalarnid (®Kevlar oder ®Twaron)und Copolymeren (z.B. ®Teijin HM50), die über 30 % an Bausteinen abgeleitet von Terephthalsäure und para-Phenylendiamin enthalten, sowie Fasern aus flüssigkristallinen Polyestern und Fasern aus ultrahochmolekularem Polyäthylen (z. B. ®Dyneema).

Als antiadhäsive Schicht **Z** kann beispielsweise ein übliches Trennmittel (Wachse, silikonmodifizierte Wachse, Fettsäureamidwachse, Salze von langkettigen Fettsäuren wie Zinkstearat, Polyvinylalkohol, fluorierte Polymere und natürliche Phospholipide wie Sojalecithin) eingesetzt werden.

Die erfindungsgemäßen Laminate lassen sich in allen Anwendungen einsetzen, in denen bisher zum Beispiel Laminate aus Glasfasermatten mit ungesättigten Polyestern mit einer Gelcoat-Oberfläche verwendet wurden.

### Beispiele

### Beispiel 1

Auf mit Sojalecithin als antiadhäsiver Schicht überzogene Glasflächen wurden weiß eingefärbte Schichten von strahlungshärtbaren Mischungen gemäß der Tabelle 1 aufgezogen, in Schichtdicken von 600, 400 und 200 µm. Die Beschichtungen wurden durch Bestrahlen mit UV-Licht (je 2 mit Gallium dotierten Quecksilberlampen und undotierten Quecksilberlampen mit einer auf die Bogenlänge bezogene Leistungsaufnahme von je 80 W/cm) bei unterschiedlichen Durchlaufgeschwindigkeiten durch die Bestrahlungszone gehärtet.

**Tabelle 1**

| Zusammensetzung der Beschichtungsmittel in g | | | | | | | |
|---|---|---|---|---|---|---|---|
| Beschichtung | 1 | 2 | 3 | 4 | 5 | 6 | 7 |
| ungesättigter Polyester ¹ | 100 | 50 | 100 | | 100 | 100 | 50 |
| Epoxyacrylat ² | | 50 | | | | | 50 |
| Urethanacrylat ³ | | | | 100 | | | |
| Farbpaste ⁴ | 10 | 10 | 20 | 20 | 20 | 20 | 20 |
| Photoinitiator ⁵ | .4,6 | 4,8 | 5 | 5 | | | |
| Photoinitiator ⁶ | | | | | 5 | 4,8 | 5,2 |
| Entlüfter ⁷ | 0,3 | 0,3 | 0,3 | 0,3 | 0,3 | 0,3 | 0,3 |
| Reaktivverdünner ⁸ | 15 | 20 | 25 | 25 | 25 | | |
| Reaktivverdünner ⁹ | | | | | | 20 | 30 |
| Viskosität¹⁰ in mPa ·s | 1113 | 1567 | 803 | 1009 | 756 | 841 | 798 |

| | | | | | | | |
|---|---|---|---|---|---|---|---|
| Erläuterungen: 1 ungesättigter Polyester (100 %ig) enthaltend Bausteine abgeleitet von Trimethylolpropandiallyläther (40 %), Benzylalkohol (5 %), Diäthylenglykol (15 %) und Fumarsäure (40 %), wobei die Massenanteile auf die Masse des Polyesters bezogen sind, | | | | | | | |
| 2 Epoxyacrylat auf Basis von einem Bisphenol A-Epoxidharz mit gewichtsmittlerer molarer Masse von ca. 700 g/mol, | | | | | | | |
| 3 Urethanacrylat auf Basis von aliphatischen Polyolen, einem aliphatischen Diisocyanat und einer Mischung von Hydroxyalkyl(meth)acrylaten | | | | | | | |
| 4 weiße Farbpaste auf Basis von ungesättigtem Polyester, ®Viapal 9010 OEP, Surface Specialties Austria GmbH | | | | | | | |
| 5 Photoinitiatormischung ®Irgacure 184 (Hydroxycyclohexylphenylketon) und ®Irgacure 819 (Phenyl-2,4,6-trimethylbenzoylphosphinoxid), gleiche Massenanteile, Ciba Speciality Chemicals | | | | | | | |
| 6 Photoinitiatormischung ®Irgacure 184,Ciba Speciality Chemicals, und ®Lucirin TPO (Triphenylphosphinoxid), BASF AG, gleiche Massenanteile, | | | | | | | |
| 7 Entlüfter ®TEGO Airex 920, Th. Goldschmidt GmbH | | | | | | | |
| 8 Dipropylenglykoldiacrylat | | | | | | | |
| 9 Triäthylenglykoldimethacrylat | | | | | | | |
| 10 gemessen gemäß DIN EN ISO 3219 bei 23 °C | | | | | | | |

Nach der Härtung bei den angegebenen Bandgeschwindigkeiten wurde mit einem mit Glasfasermatten verstärkten ungesättigten Polyesterharz (®Viapal VUP 4782/BEMT 55; Co-Peroxid-System) auf die bestrahlte Seite laminiert, anschließend wurde der Aufbau von der Glasplatte abgelöst. Es wurden die in der Tabelle 2 zusammengestellten Ergebnisse erhalten.

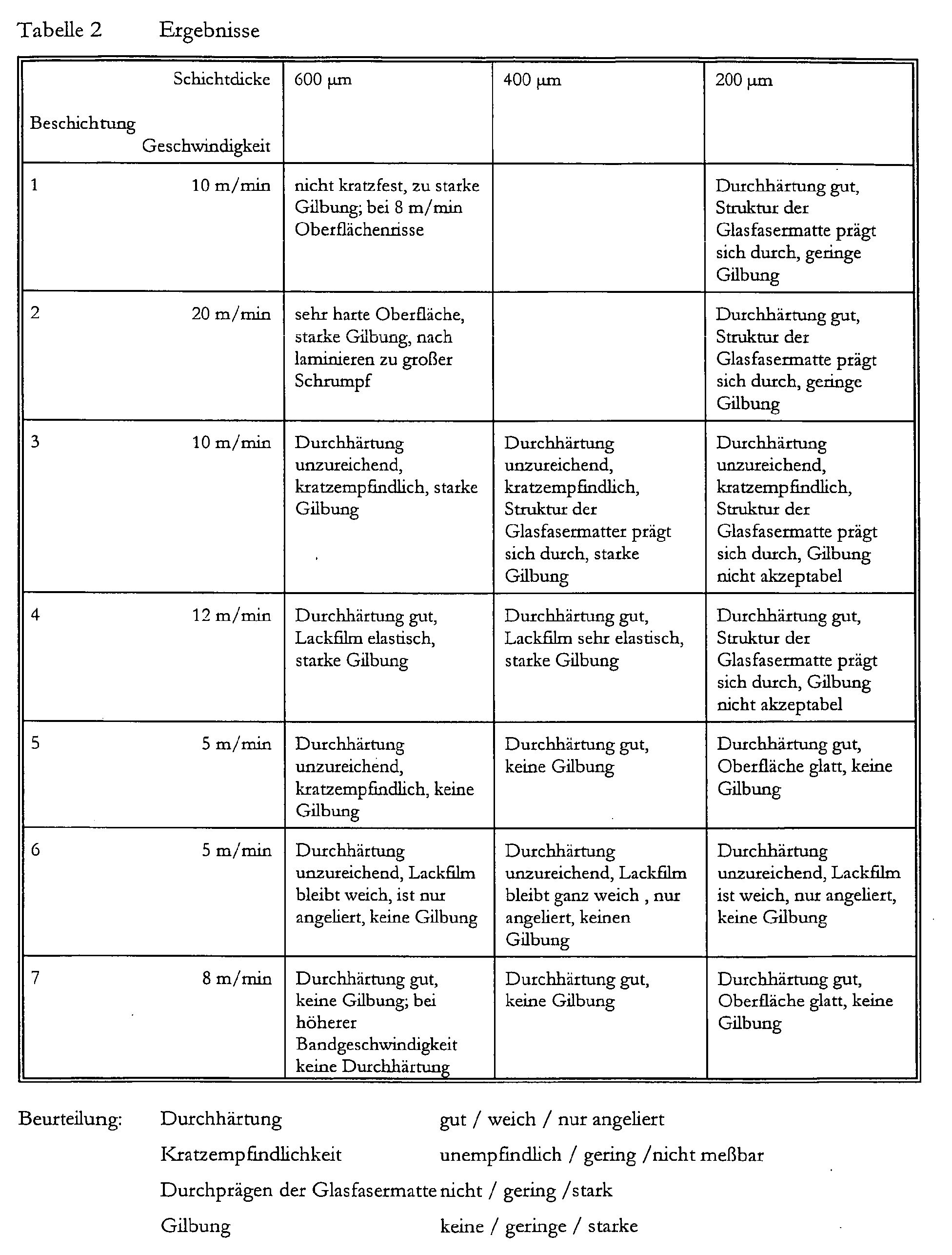

### Beispiel 2

In einer zweiten Versuchsreihe wurden mit UV-Licht härtbare Beschichtungen 2.1 und 2.2 gemäß Tabelle 3 auf mit Trennmittel wie oben beschichtete Glasplatten wie unter Beispiel 1 beschrieben aufgetragen. Die Beschichtungen wurden bei einer Bandgeschwindigkeit von 5 m/min in 10 cm Abstand unter 2 Quecksilberlampen und 2 mit Gallium dotierten Quecksilberlampen mit einer Leistungsaufnahme von jeweils 80 W/cm gehärtet, von den Glasplatten abgelöst und mit einer durch UV-Licht härtbaren Laminierschicht verbunden. Diese Schicht bestand aus einer 10 × 20 cm² Glasfasermatte ( ca. 5 g/m²), auf die ca. 20 g der UV-Laminierlacke 2.3 und 2.4 gemäß der Angabe in der Tabelle 3 aufgetragen waren. Nach dem Laminieren wurde das Laminat durch Bestrahlen mit UV-Licht von der Seite der imprägnierten Glasfasermatte aus gehärtet.

Die Ergebnisse sind in der Tabelle 4 zusammengefaßt.

**Tabelle 3**

| **UV-härtbare Lacke** (Zusammensetzungen der Lacke in g) | | | | |
|---|---|---|---|---|
| Lack | 2.1 | 2.2 | 2.3 | 2.4 |
| ungesättigter Polyester ¹ | 100 | 50 | 100 | 50 |
| Epoxyacrylat ² | | 50 | | 50 |
| Photoinitiator ⁵ | 5 | 5,2 | 5 | 5,2 |
| Entlüfter ⁶ | 0,3 | 0,3 | 0,3 | 0,3 |
| Reaktivverdünner ⁷ | 25 | | 25 | |
| Reaktivverdünner⁸ | | 30 | | 30 |
| Farbpaste ⁹ | 20 | 20 | | |
| Erläuterungen siehe Tabelle 1 | | | | |

**Tabelle 4**

| Ergebnisse | | | |
|---|---|---|---|
| Lack | Schichtdicke | Härtung | Gilbung |
| 2.1 | 600 µm | durchgehärtet | nicht vergilbt |
| | 400 µm | | |
| 2.2 | 600 µm | durchgehärtet | nicht vergilbt |
| | 400 µm | | |
| | Auftragsmenge | | |
| 2.3 | ca. 20 g auf 10×20 cm² | durchgehärtet | nicht vergilbt |
| 2.4 | ca. 20 g auf 10×20 cm² | durchgehärtet | nicht vergilbt |

### Beispiel 3

In einer dritten Versuchsreihe wurden auf Holzfurnier (10 × 20 cm²) Glasfasermatten (10 × 20 cm²; ca. 5 g/m²) aufgebracht und mit UV-Licht härtbare Beschichtungen 3.1 und 3.2 gemäß Tabelle 5 laminiert (Auftragsmenge 20 g/m²) und mit 2 Quecksilberlampen mit einer Leistungsaufnahme von jeweils 80 W/cm bei einer Bandgeschwindigkeit von 10 m/min ausgehärtet. Durch dieses Verfahren erhielt man einen Furnier-Laminat-Verbundstoff in einem rationellem Arbeitsschritt, der bei einem Verfahren gemäß dem Stand der Technik mindestens 2 Arbeitsschritte benötigt (Herstellen der Form, z.B. einen Aluminiumträger, und Fixieren (Verkleben) des Furniers an bzw. auf die entsprechende Form).

Dieses Formteil (=Furnier-Laminatverbund) wurde anschließend auf der Furnier-Seite mit einem UV-Klarlack gemäß Beschichtung 3.3 (siehe Tabelle 5) lackiert, wobei einmal 2 und einmal 3 Schichten des Klarlacks mit einer Naßschichtdicke von jeweils 200 µm aufgetragen wurden. Die Beschichtung wurde wiederum durch Belichtung bei einer Bandgeschwindigkeitvon 10 m/min mit 2 Quecksilberlampen mit einer Leistungsaufnahme von je 80 W/cm gehärtet. Die mit dem UV-Klarlack lackierte und gehärtete Oberfläche kommt einer Polyesterdickschichtlackierung gleich, sie kann jedoch innerhalb kurzer Zeit fertiggestellt werden. Im Vergleich erfordert eine Polyesterdickschichtlackierung für Einlegearbeiten in Automobilen (Armaturenbrett, Lenkrad, Schaltknüppelgriff) mindestens 6 bis 7 Aufträge mit einer Auftragsmenge von jeweils ca. 250 g/m² und gegebenenfalls anschließendes Schleifen/Polieren/Schwabbeln; die Gesamtschichtstärke am Ende der Verarbeitung beträgt dann ca. 700 bis 800 µm; der Lackiervorgang benötigt ca. 4 bis 5 Stunden, wobei die Endbearbeitung durch Schleifen und Polieren erst 72 h nach beendeter Lackierung erfolgen kann.

Die Ergebnisse sind in der Tabelle 6 zusammengefaßt.

**Tabelle 5**

| **UV-härtbare Lacke** (Zusammensetzungen der Lacke in g) | | | |
|---|---|---|---|
| Lack | 3.1 | 3.2 | 3.3 |
| ungesättigter Polyester ¹ | 100 | 50 | |
| Epoxyacrylat ² | | 50 | |
| Urethanacrylat 3 | | | 85 |
| Photoinitiator ⁶ | 5 | 5,0 | |
| Photoinitator 11 | | | 4,7 |
| Entlüfter ⁶ | 0,3 | 0,3 | 0,3 |
| Reaktivverdünner ⁸ | 25 | | 10 |
| Reaktiverdünner ⁹ | | 30 | |
| Erläuterungen siehe Tabelle 1 | | | |

**Tabelle 6**

| **Ergebnisse** | | |
|---|---|---|
| Lack | Schichtdicke | Härtung |
| 3.1 | ca. 20 g auf 20 × 10 cm² | durchgehärtet |
| 3.2 | ca. 20 g auf 20 × 10 cm² | durchgehärtet |
| 3.3 | 200 µm Naßfilm | durchgehärtet |

Es zeigt sich, daß styrolhaltige ungesättigte Polyesterharzen mit der klassischen radikalischen Härtung mittels Kobaltsalzen und Peroxiden durch styrolfreie UV-härtbare Systeme ersetzt werden können. Der Vorteil dieser Systeme ist die Freiheit von Styrol und die erhöhte Reaktivität des UV-härtbaren Systems und dadurch höhere Produktivität. Furnier-Laminat-Verbundwerkstoffe können durch Anwendung der UV-Technologie in einem Arbeitsschritt hergestellt werden. Die Verwendung von einer UV-Klarlacklackierung als Ersatz für UP-Lack ergibt eine deutliche Produktivitätserhöhung durch raschere Härtung.

## Patentansprüche

1. Faserverstärkte Laminate mit mindestens zwei Schichten, **dadurch gekennzeichnet, daß** mindestens eine Schicht ein ein Allyl-, Acryl- und/oder Methacryl-Gruppen aufweisendes Polymer enthält, das durch Bestrahlen mit energiereichem Licht härtbar ist.

2. Faserverstärkte Laminate nach Anspruch 1, **dadurch gekennzeichnet, daß** eine außenliegende Schicht A' ein Allyl-, Acryl- und/oder Methacryl-Gruppen aufweisendes Polymer **A** enthält, das durch energiereiche Strahlung härtbar ist, und eine angrenzende Schicht Verstärkungsfasern enthält und eine härtbare Masse **B'** enthaltend ein Polymer **B** ausgewählt aus radikalisch (**B1**) und durch Bestrahlung mit energiereichem Licht (**B2**) polymerisierbaren Systemen.

3. Faserverstärkte Laminate nach Anspruch 2, **dadurch gekennzeichnet, daß** die Polymere **A** und **B2** unabhängig voneinander ausgewählt sind aus Epoxy-Acrylaten, Urethan-Acrylaten, Melamin-Acrylaten, Polyäther-Acrylaten, Polyester-Acrylaten, den entsprechenden Methacrylaten und Allylgruppen-haltigen Polyestern sowie deren Mischungen.

4. Faserverstärkte Laminate nach Anspruch 2, **dadurch gekennzeichnet, daß** die Polymeren **B1** ungesättigte Polyester sind, die gegebenenfalls Styrol enthalten.

5. Faserverstärkte Laminate nach Anspruch 2, **dadurch gekennzeichnet, daß** die Polymeren **B1** ausgewählt sind aus Allylgruppen-haltigen Polyestern sowie deren Mischungen mit ungesättigten Polyestern auf Basis von Fumarsäure.

6. Faserverstärkte Laminate nach Anspruch 1, **dadurch gekennzeichnet, daß** die erste Schicht eine flexible Folie ausgewählt aus Furnieren, Polymerfolien und Metallfolien ist, und die zweite Schicht Verstärkungsfasern und das strahlenhärtbare Polymer A enthält.

7. Faserverstärkte Laminate nach Anspruch 6, **dadurch gekennzeichnet, daß** die erste Schicht ein Furnier ist, die nach der Härtung der zweiten Schicht mit mindestens einer durch Bestrahlung mit enrgiereichen Licht gehärteten Beschichtung überzogen ist.

8. Verfahren zum Herstellen von gehärteten Laminaten nach Anspruch 2, umfassend die Schritte: (1) Herstellen einer gehärteten Polymerschicht **A'** aus einem Polymeren A durch Bestrahlung mit energiereichem Licht, und (2) Aufbringen einer weiteren Schicht auf die in der Stufe (1) hergestellten Schicht **A'**, wobei die weitere Schicht Verstärkungsfasern und eine härtbare Masse **B'** enthält, die durch radikalische Polymerisation aus einem radikalisch polymerisierbaren System **B1** und/oder durch Bestrahlung eines Systems **B2** mit energiereichem Licht hervorgeht.

9. Verfahren zur Herstellung von geformten Laminaten nach Anspruch 2, **dadurch gekennzeichnet, daß** im ersten Schritt ein Formkörper oder eine Fläche aus einem glatten Substrat mit einer Schicht **Z** überzogen wird, die antiadhäsiv wirkt, diese Schicht anschließend in einem zweiten Schritt mit Masse überzogen wird, die einen durch Bestrahlung mit energiereichem Licht polymerisierbaren Stoff **A** enthält, im dritten Schritt durch Bestrahlung der Stoff **A** polymerisiert und damit gehärtet wird, im vierten Schritt die freie Oberfläche dieser Schicht mit einer härtbaren Masse **B'** überzogen wird enthaltend ein Polymer **B** ausgewählt aus radikalisch (**B1**) und durch Bestrahlung mit energiereichem Licht (**B2**) polymerisierbaren Systemen und Verstärkungsfasern, und im fünften Schritt die härtbare Masse **B'** zumindest teilweise gehärtet wird, und im sechsten Schritt von der Fläche oder dem Formkörper abgelöst wird, wobei das gebildete Laminat anschließend durch Einwirkung von Wärme und Druck verformt wird, solange die Masse **B'** noch nicht vollständig gehärtet ist.

10. Verfahren zur Herstellung von Laminaten nach Anspruch 6, **dadurch gekennzeichnet, daß** die Folie mit einer mit einem durch Bestrahlung mit energiereichem Licht härtbaren Polymer **A** getränkten Verstärkungsfasern enthaltenden Schicht bedeckt wird, und die polymergetränkte faserhaltige Schicht anschließend durch Bestrahlen gehärtet wird.

11. Verfahren zur Herstellung von lackierten Laminaten nach Anspruch 10, **dadurch gekennzeichnet, daß** nach der Härtung der faserhaltigen Schicht die Folie mit einem durch Bestrahlen mit energiereichem Licht härtbaren Klarlack überzogen wird.
